# EUROPEAN PATENT APPLICATION

(11) **EP 4 692 890 A1**
(43) Date of publication of application: **11.02.2026**
(21) Application number: 24193853.9
(22) Date of filing: 09.08.2024
(51) Int. Cl.: G02B 21/00, G02B 21/36, G06F 11/07

(54) **METHOD AND COMPUTING DEVICE FOR OPERATING A MICROSCOPY SYSTEM**

(71) Applicant: Leica Microsystems CMS GmbH, 35578 Wetzlar (DE)
(72) Inventor: RITSCHEL, Kai, 35578 Wetzlar (DE); SCHACHT, Volker, 35578 Wetzlar (DE)
(74) Representative: Maiwald GmbH

(57) **Abstract**

A computer-implemented method of operating a microscopy system (100) is described, the method comprises obtaining log data indicative of at least one error occurring at the microscopy system; evaluating, by means of an Artificial Intelligence-based, Al-based, module the obtained log data with respect to one or more known errors; and determining, based on the evaluation, whether the error indicated by the log data is associated with at least one known error.

## Description

### TECHNICAL FIELD

The present disclosure generally relates to the field of microscopes or microscopy systems. More specifically, the present disclosure relates to a computer-implemented method of operating a microscopy system, to a computing device for operating a microscopy system, and to a corresponding microscopy system. Further, the present disclosure relates to a computer program causing a computing device or microscopy system to perform steps of said method, and to a computer-readable medium storing such program.

### BACKGROUND

Typical microscopy systems or microscopes are rather complex in terms of their configuration, set-up as well as their handling or operation. Also, microscopy systems are often at least to a certain extent adapted to a particular experiment or application, which can further increase complexity of the configuration and/or operation. Although a lot of effort is put into the manufacturing of failsafe microscopy systems, errors, malfunctions or bugs can occur, which may be attributed to or caused by, for example, one or more failing components, improper handling by a user, software issues or other causes.

When an error occurs at a microscopy system, usually the user or operator of the microscopy system reports the error to the manufacturer or a corresponding service provider for servicing the microscopy system. Usually, a log file is generated by the user and sent to the manufacturer or service provider, where a service technician analyses the log file and preferably provides a solution for the error to the user. Since typical log files generated by microscopy systems have a considerable size, for example more than about 20 MB in compressed format, and can include thousands of pages of log messages, finding the error based on analysing the log file can be time consuming and cumbersome, even for experienced service technicians. Also, the microscopy system may not be operable for a considerable time period, for example until a solution to the error is found.

In addition, even though an error may have been resolved, a similar or identical error occurring later at the same or a different microscopy system may require another service technician to spent time and effort on analysing another log file.

Hence, the process of identifying an error occurring at a microscopy system and potentially resolving the error may be time consuming and expensive, and can be accompanied by a downtime of the microscopy system.

### SUMMARY

It may, therefore, be desirable to provide for an improved method, computing device and microscopy system, which for example allows to quickly identify, detect and/or find an error occurring at a microscopy system, thereby potentially minimizing or avoiding downtime of the microscopy system.

This is achieved by the subject matter of the independent claims, wherein further exemplary embodiments are included in the dependent claims and the following description.

Aspects of the present disclosure relate to a computer-implemented method of operating a microscopy system, to a computing device for operating a microscopy system, to a corresponding microscopy system, to a computer program causing a computing device or microscopy system to perform steps of said method, and to a computer-readable medium storing such program. Any feature, function, element and/or advantage described herein with reference to an or one aspect of the present disclosure equally applies to any other aspect of the present disclosure. In particular, it is emphasized that any feature, function and/or step described with reference to the method of operating the microscopy system can be a feature, function and/or element of the computing device and/or the microscopy system, and vice versa.

According to a first aspect of the present disclosure, there is provided a computer-implemented method of operating a microscopy system. The method according to the first aspect of the present disclosure may relate to a method of operating, e.g. locally operating, the microscopy system via a computing device of or associated with the microscopy system. Alternatively or additionally, the method of the first aspect may relate to a method of operating, e.g. remotely operating, the microscopy system via an external computing device remote from the microscopy system. The method comprises obtaining log data indicative of at least one error occurring at the microscopy system. The method further comprises evaluating and/or analysing, by means of an Artificial Intelligence-based module (referred to herein as Al-based module) the obtained log data with respect to one or more known errors. Further, the method comprises determining, based on the evaluation, whether the error indicated by the log data is associated with at least one known error.

By analysing the log data with respect to one or more known errors by means of the Al-based module, it may reliably, quickly and efficiently be determined whether the error at the microscopy system is associated with a known error. Hence, effort, time and resources for analysing the log data can be reduced to a minimum. In particular, use of the Al-based module may allow to identify or find complex errors or hardly identifiable errors in a large amount of log data within a short period of time, and for example with a minimum or even no human resources. Hence, a versatile and reliable procedure for error detection can be provided. Also, providing a solution to the error or corresponding recommendation as to resolve, avoid or alleviate the error may be facilitated, preferably within a short period of time, e.g. which may allow to minimize or avoid a potential downtime of the microscopy system.

As used herein, "the at least one error occurring at the microscopy system" can refer to any malfunction or erroneous functioning of one or more hardware and/or software components of the microscopy system. For instance, an error can be caused by a software bug, a malfunction or defect of one or more hardware components, an erroneous actuation or activation of one or more hard- and/or software components, an erroneous sequence, order and/or timing of the actuation of one or more hard- and/or software components, and/or an improper handling or operation of the microscopy system by a user.

The at least one error may have occurred at the microscopy system in the past relative to a time or time point, at which the log data is evaluated by the Al-based module with respect to the one or more known errors. Alternatively, the at least one error may occur in future or near future relative to the time or time point, at which the log data is evaluated by the Al-based module with respect to the one or more known errors. In the latter case, the log data may, for example, indicate, may contain information allowing to, and/or may allow to determine that the error is likely to occur or will occur in the future, whereas in the former case, the actual occurrence of the error may be recorded in the log data.

In the context of the present disclosure, the log data may refer to automatically generated and/or recorded digital information, for example capturing one or more activities, one or more events, and/or one or more operations of the microscopy system, such as e.g. actuation or activation of one or more hardware and/or software components of the microscopy system. Optionally, time information for the one or more activities, one or more events, and/or one or more operations of the microscopy system may be contained in the log data. In an example, a plurality of events, activities and/or operations of the microscopy system may be stored in the log data, wherein for each event, activity and/or operation a timestamp indicating the date and time of the event, activity or operation, and a log message detailing the event, activity or operation may be contained in the log data. Optionally, additional information, such as a log level, an event ID, metadata, an origin of the event or other data may be contained in the log data. Such log message, optionally with a timestamp and/or with further information or data, may also be referred to herein as log entry of the log data.

Accordingly, the log data may include a plurality of log entries, each entry being indicative of at least one event, activity and/or operation occurring at the microscopy system, and optionally being indicative of a timestamp for the occurrence of the event, activity and/or operation.

Generally, the log data may be obtained and/or stored in any data format, preferably a structured format, such as e.g. plain text, JSON, YAML, XML or other formats.

For example, the log data may be stored in one or more log files at a data storage, for example a data storage of one or more of a computing device of the microscopy system, a computing device remote from the microscopy system and a further data storage or data source. The log data may be used for monitoring, debugging, auditing, and/or analysing operation of the microscopy system in terms of its software and/or hardware components.

The log data and/or corresponding log files may optionally be compressed. Accordingly, the method may further comprise decompressing and/or compressing the received log data. Therein, the log data may be compressed in any known format, such as ZIP, RAR, or other format.

Generally, the log data can have a substantial data size. For example, the log data may have a size of more than about 5 MB, more than about 10 MB, or even more than about 20 MB, for example in compressed data or file format, e.g. ZIP format.

Generally, an error may be indicated by the log data by any deviation of the log data, e.g. of one or more log messages, from corresponding log data, e.g. one or more log messages, expected during normal or non-erroneous operation of the microscopy system. For example, an error may be explicitly recorded in the log data in the form of one or more log messages indicative or descriptive of the error. Such log message may also be referred to as error message. Alternatively or additionally, an error may be indicated by log data by one or more of a sequence of one or more log messages, an order of one or more log messages, a timing of one or more log messages, a time difference between a plurality of log messages, and the like. Accordingly, any deviation in one or more log messages from one or more log messages expected during normal or non-erroneous functioning of the microscopy system can indicate or allow to determine an error occurring at the microscopy system. Such deviations from normal operation recorded in the log data may also referred to herein as error characteristics and/or error pattern.

In the context of the present disclosure, the "known errors" may refer to or denote errors or malfunctions that have been previously recorded in log data of one or more microscopy systems. For instance, the one or more known errors may have occurred at one or more microscopy systems in the past, and may optionally have been analysed and/or resolved.

Further, the phrase "the at least one error being associated with at least one known error" may mean that the at least one error occurring at the microscopy system is substantially similar and/or identical to the at least one known error. For instance, the at least one error may be substantially similar to the at least one known error in terms of the log data, one or more log messages contained therein, in terms of one or more error characteristics and/or one or more error patterns, as further described herein. Alternatively or additionally, the at least one error and the at least one known error may be substantially similar to each other or associated with each other in terms of an issue or problem arising at the microscopy system due to the at least one error, respectively, the at least one known error. Alternatively or additionally, the at least one error and the at least one known error may be substantially similar or associated with each other in terms of one or more hardware and/or software components involved in or contributing to the at least one error, respectively, the at least one known error.

In an example, determining that the at least one error is associated with the at least one known error may refer to or include determining that the at least one error substantially matches or corresponds to the at least one know error, for example in terms of one or more error characteristics indicated by or recorded in the log data.

In a non-limiting example, determining whether the at least one error is associated with at least one known error may include determining, based on evaluating the log data with the Al-based module, whether one or more error characteristics of the at least one error are indicated by and/or present in the the log data, which one or more error characteristics correspond to or match one or more error characteristics of the at least one known error. Accordingly, determining whether the at least one error is associated with at least one known error may include evaluating and/or analysing the log data in terms of one or more error characteristics associated with or of the at least one known error.

Optionally, one or more error characteristics may be determined for the at least one error based on evaluating the log data, which may further optionally be intercompared with one or more predefined error characteristics for at least one known error. By using one or more error characteristics, the error may be reliably identified in the log data and it may reliably be determined whether the error is associated with at least one known error.

The one or more error characteristics of the at least one error and/or the one or more error characteristics of the at least one known error may also be referred to herein as error pattern of the at least one error and/or the at least one known error. For example, an error pattern may define one or more error characteristics. Hence, the terms error characteristic and error pattern can be interchangeably or synonymously used herein.

In the context of the present disclosure, an error characteristic and/or an error pattern including or defining one or more error characteristics can, for example, relate to or be indicative of one or more predefined log messages being present in the respective log data, such as for example one or more error messages. Alternatively or additionally, an error characteristic and/or an error pattern can relate to actuation or activation of one or more software and/or hardware components of the microscopy system being involved in causing the respective error and/or being affected by the respective error. Therein, actuation or activation of one or more hard- and/or software components of the microscopy system may be indicated in the respective log data by one or more log messages. Alternatively or additionally, an error characteristic and/or an error pattern can relate to one or more of a sequence of one or more log messages, an order of one or more log messages, a timing of one or more log messages, a time difference between a plurality of log messages, and the like. As noted above, any deviation of one or more log messages from one or more log messages expected during normal or non-erroneous operation of the microscopy system can indicate an error and, hence, constitute an error characteristic and/or error pattern.

In the context of the present disclosure, the microscopy system may relate to a microscope or microscope device configured for magnifying and/or visualizing small objects or structures, for example which are not visible to the naked human eye. The terms microscopy system and microscope or microscope device may be interchangeably or synonymously used herein. The microscopy system may include one or more of an optical system, an illumination source for illuminating a sample, a stage for supporting the sample, one or more detectors for capturing one or more images of the sample, and one or more software components, such as image processing software or other software components. Generally, the present disclosure is not limited to any particular type of microscopy system or microscope, but can be used to advantage with any type of microscopy system, such as for example, optical microscopy systems, including brightfield microscopes, phase contrast microscopes, fluorescence microscopes, confocal microscopes, and oblique plane microscopes, but also electron microscopes and scanning probe microscopes.

As used herein, the Al-based module may refer to a discrete component of a computing device configured to evaluate the log data of one or more microscopy systems. The Al-based module may be implemented in software and/or hardware in the computing device. For example, the Al-based module may include one or more software components or algorithms, optionally implemented in or being executed by a processing circuitry with one or more processors for data processing. Such algorithms or software components may constitute, define and/or comprise one or more Al-based models, for example modelling one or more aspects associated with the evaluation of log data in terms of errors occurring at one or more microscopy systems. Accordingly, the Al-based module may comprise one or more Al-based models configured to evaluate log data in terms of whether an error indicated by (given or received) log data is associated with one or more known errors. Therefore, the terms Al-based module and Al-based model may be interchangeably or synonymously used herein.

The Al-based module may not be limited to particular types of Al-based modules or Al-based models, but can refer to or include one or more of a classificatory model, a Large Language Model (LLM), a predictive model, a recommender system, or other types. Optionally, the at least one Al-based module may comprise or include a plurality of different types of Al-based modules and/or Al-based models.

Further, it is noted that the Al-based module may include a pretrained or locked model, or it may be re-trained, for example on-the-fly, during runtime or inference.

According to an embodiment obtaining the log data includes receiving the log data at one of or both a computing device of the microscopy system, and an external computing device remote from the microscopy system. Optionally, receiving the log data may include retrieving the log data from a data storage storing the log data, for example a data storage of one or more of the computing device of the microscopy system, the computing device remote from the microscopy system and a further data storage or data source.

Generally, the computing device associated with the microscopy system, which is also referred to herein as computing device of the microscopy system, may refer to or denote a computing device operably and/or communicatively coupled with the microscopy system, for example via one or more communication interfaces. Optionally, the computing device of the microscopy system may be an integral part of the microscopy system.

The external computing device remote from the microscopy system may be located at a remote location, remote from the microscopy system. Optionally, the external computing device may be communicatively and/or operatively coupled with the microscopy system, for example via one or more communication interfaces.

The computing device of the microscopy system and the external computing device may be identical or similar in configuration and functionality, or may differ from each other. In particular, each of the computing devices described herein may have a processing circuitry with one or more processors for data processing. Any reference to the computing device can include one or both reference to the computing device of the microscopy system and reference to the external computing device.

Optionally, each of the computing devices described herein may comprise a data storage for storing data, such as for example the log data. Optionally, software instructions or a computer program may be stored in the data storage, which, when executed by the one or more processors, instruct the corresponding computing device to perform one or more steps of the method according to the first aspect and/or any other aspect of the present disclosure.

The computing device of the microscopy system and/or the external computing device may be configured to communicate with each other and/or the microscopy system, for example via one or more communication interfaces. Such communication or data connection may be based on one or more communication protocols, technologies or standards. By way of example, the computing device of the microscopy system and/or the external computing device may comprise a communication interface configured to communicate and/or exchange data via an Internet connection, a Local Area Network (LAN) connection, a WiFi connection, a Bluetooth connection, a mobile phone network connection, a 3G connection, an edge connection, an LTE connection, a BUS connection, a wireless connection, a wired connection, a radio connection, a near field connection, an loT connection or any other connection using any appropriate communication protocol.

In an exemplary implementation, obtaining the log data may include receiving the log data at an external computing device communicatively couplable with the microscopy system and/or the computing device thereof, for example via one or more communication interfaces. Alternatively or additionally, the method may further comprise transmitting the log data from the microscopy system and/or the computing device thereof to an external computing device remote from the microscopy system, for example via one or more communication interfaces.

Receiving the log data at the external computing device may allow for an evaluation at this external computing device by an Al-based module implemented there, thereby saving processing resources at the microscopy system for identifying or detecting the error. Also, dedicated hardware may be provided for the Al-based module when being implemented at the external computing device, which may allow for faster analysis or evaluation of the log data with respect to the known errors, when compared to typical computing devices of microscopy systems. It is emphasized, however, that the log data may be analysed or evaluated at the computing device of the microscopy system or both the external computing device and the computing device of the microscopy system

Accordingly, the Al-based module may be implemented in one of or both the computing device of the microscopy system, and the external computing device remote from the microscopy system. For example, one or more parts of the Al-based module may be implemented or configured at the computing device of the microscopy system and/or one or more parts of the Al-based module may be implemented or configured at the external computing device. When parts of the Al-based module are implemented at the computing device of the microscopy system and parts thereof are implemented at the external computing device, data or data signals may be transferred between the various parts or components. This may allow to distribute the computing or processing burden across both computing devices, and hence may allow for a faster evaluation of the log data.

Alternatively or additionally, the Al-based module may refer to a multi-stage, Al-based module with a plurality of Al-based algorithms, which sequentially or simultaneously process or evaluate the log data, and which may be implemented at one of or both the computing device of the microscopy system and the external computing device.

Alternatively or additionally, identical or substantially similar Al-based modules may be implemented at both the computing device of the microscopy system and the external computing device. Implementing the same Al-based module at both computing devices may, for example, allow to compare results obtained by both modules, and hence allow for a plausibility check or verification of results of the Al-based modules.

According to an embodiment, the Al-based module includes a Large Language Model (LLM). Since the log data may be stored in or contain (human-)readable text, and since LLMs are particularly configured to generate, manipulate, modify and understand large amounts of readable text within a short period of time, evaluating the log data with an LLM can be advantageous and, for example, allow to quickly identify the error in the log data, even for large amounts of log data, respectively, for log data containing large amounts of text or log messages.

Generally, Large Language Models (LLMs) refer to or denote advanced Al-based models designed to understand, generate, and manipulate human language. They are usually configured with deep learning architectures, for example transformer models, which enable them to process and generate text by understanding context and semantics. Typically, Large Language Models can be embodied as neural networks trained on vast amounts of text data to perform various natural language processing (NLP) tasks. They can leverage a transformer architecture, which can use self-attention mechanisms to weigh the significance of different words and phrases in a sequence. This architecture allows LLMs to capture long-range dependencies in text, making them highly effective for the task of identifying the at least one error in the log data and/or determining whether the error is associated with a known error.

According to an embodiment, the method further comprises determining that the at least one error is associated with one or more known errors. Alternatively or additionally, the method may comprise confirming or positively determining that the at least one error is associated with the at least one known error. For instance, it may be determined that the at least one error is associated with said one or more known errors based on or by determining that the at least one error substantially matches or corresponds to the at least one known error, for example in terms of one or more error characteristics and/or one or more error patterns.

According to an embodiment, the method further comprises, upon determining and/or confirming that the error indicated by the log data is associated with at least one known error, one or more of:
- identifying one or more data sections or log messages in the log data, the one or more data sections or log messages being indicative of the at least one error occurring at the microscopy system;
- extracting one or more data sections or log messages in the log data, the one or more data sections or log messages being indicative of the at least one error occurring at the microscopy system;
- highlighting or marking one or more data sections or log messages in the log data, the one or more data sections or log messages being indicative of the at least one error occurring at the microscopy system;
- generating a summary of the log data, the summary being indicative of the at least one error occurring at the microscopy system;
- removing one or more data sections or log messages from the log data, the one or more data sections or log messages being non-related to the at least one error occurring at the microscopy system; and
- determining a time information, for example a timestamp, in the log data for the occurrence of the at least one error at the microscopy system.

As used herein, a data section of the log data may refer to a block or sequence of a plurality of log messages contained in the log data. Accordingly, a data section of the log data may contain a plurality of log messages.

By identifying, highlighting or extracting the data sections or log messages associated with the at least one error, a service technician or user of the microscopy system may be pointed to the relevant data section of the log data, thereby allowing to quickly find the error in the log data and optionally provide a solution. Similarly, removing non-related log messages, providing a summary report or determining the time information of the error can enable a quick identification and potential solution to the at least one error. Hence, the forementioned steps of the method can provide efficient countermeasures to quickly identify the error, and optionally to resolve, avoid or alleviate the error.

Accordingly, the log data may be reduced in size and/or content, such that the error can be quickly found and/or resolved, for example by a service technician. Also, effort and time spent on analyzing the log data, for example by service technician, can be significantly reduced. Optionally, identified and/or extracted data sections can be shown at a user interface of the microscopy system or the external computing device, thereby bringing the error to the attention of a user of the microscopy system or external computing device.

In an exemplary implementation, determining whether the error indicated by the log data is associated with a known error includes determining and/or identifying, in the received log data, one or more error patterns associated with or indicative of one or more known errors. As described above, an error pattern may refer to or define one or more error characteristics indicative of and/or descriptive for the error. For example, an error pattern and/or one or more error characteristics may be predefined or predetermined in the Al-based module, e.g. based on a corresponding training of the Al-based module, for the evaluation of log data in terms of whether the log data indicate an error that is associated with one or more known errors.

An error characteristic and/or error pattern can, for example, relate to or be indicative of one or more predefined log messages being present in the respective log data, such as for example one or more error messages. Alternatively or additionally, an error characteristic and/or an error pattern can relate to or be indicative of actuation or activation of one or more software and/or hardware components of the microscopy system being involved in causing the respective error and/or being affected by the respective error. Therein, actuation or activation of one or more hard- and/or software components of the microscopy system may be indicated in the respective log data by one or more log messages. Alternatively or additionally, an error characteristic and/or an error pattern can relate to or be indicative of one or more of a sequence of one or more log messages, an order of one or more log messages, a timing of one or more log messages, a time difference between a plurality of log messages, and the like. As noted above, any deviation of one or more log messages from one or more log messages expected during normal or non-erroneous operation of the microscopy system can indicate an error and, hence, constitute an error characteristic and/or error pattern.

In an example, identifying an error pattern and/or determining an error characteristic may include determining that one or more particular software and/or hardware components are involved in causing the error and/or are affected by the error. Alternatively or additionally, identifying an error pattern and/or determining an error characteristic may include determining that one or more particular (e.g. predetermined) log messages, a particular (e.g. predetermined) sequence of a plurality of log messages, a particular (e.g. predetermined) timing of one or more log messages, and/or a particular (e.g. predetermined) time difference between a plurality of log messages is present or contained in the log data.

In a further exemplary implementation, the Al-based module may be trained or configured to identify one or more error patterns and/or one or more error characteristics associated with one or more known errors in log data generated and/or recorded at one or more microscopy systems. Accordingly, the Al-based module may be trained to receive log data as input and evaluate the log data with respect to the one or more known errors, e.g. to determine whether an error indicated by the log data is associated with one or more known errors.

In an example, the Al-based module may include a machine-learned model, the model being trained based on log data provided, recorded and/or generated by one or more microscopy systems. For example, the Al-based module may be trained to receive log data indicative of at least one error as input and to provide a classification result for the at least one error as an output. The classification result may, for example, map the error indicated by the input log data to one or more classes of known errors. Accordingly, determining whether the at least one error indicated by the log data is associated with at least one known error can include determining a classification result indicative of one or more classes of known errors.

In an exemplary embodiment, the Al-based module is trained using recorded log data indicative of a plurality of known errors that occurred at one or more microscopy systems. Using such real-life log data as training data may allow to cover multiple errors that have occurred in the past at the respective microscopy systems. Also complex errors and corresponding log data may be used for training. It is noted, though, that the recorded log data of microscopy systems can be supplemented or even substituted by synthetic training data.

According to an embodiment, the Al-based module is trained based on an error database, the error database including a plurality of entries, each entry being indicative of at least one known error that occurred at one or more microscopy systems. In other words, an error database with predefined structure may be used to train the Al-based module. Using an error database may allow to combine various different types of errors, various different types of microscopy systems, and/or various different types of log data in a homogeneous data structure, thereby facilitating efficient training of the Al-based module.

In an exemplary implementation, one or more entries of the error database, for example each entry, may be indicative of one or more error characteristics and/or one or more error patterns of the respective known error associated with the entry.

It should be noted that any step of the method described herein "to be based on the error database" may be accomplished or implemented by a corresponding training of the Al-based module. Accordingly, the Al-based module may have at least a part of the error database trained thereinto. Alternatively, however, the Al-based module may be trained or configured to process at least a part of the error database to determine whether the error indicated by received log data is associated with one or more known errors.

Also, it should be noted that the term "training" is to be construed broadly and can include actual training, re-training or fine-tuning of the Al-based module using training data, as well as augmentation techniques, such as Retrieval Augmented Generation or similar techniques that may be applied e.g. in case the Al-based module is based on or includes an LLM.

In an exemplary implementation, one or more entries of the error database, for example at least a subset of entries or each entry of the error database, may be linked to or associated with corresponding log data indicative of said at least one known error. For example, for one or more entries, optionally for each entry, the corresponding log data indicative of the respective known error associated with the respective entry can be stored in the database. This may enable further processing or analysis, for example at a later time, to create a set of training data for the Al-based module or to validate the Al-based module.

According to an embodiment, one or more entries, e.g. at least a subset of the entries or each entry, of the error database includes at least one recommendation to resolve or alleviate said at least one known error associated with the respective entry of the error database. Such recommendation may, for example, include information on how the respective known error has been resolved. Alternatively or additionally, a recommendation may be informative or descriptive of one or more measures or actions to be performed at the microscopy system to resolve, avoid or alleviate the respective known error. This may allow to apply the one or more measures to resolve or alleviate said at least one error occurring at the microscopy system, which may be associated with a respective known or corresponding entry stored in the error database. It is noted that "resolving or alleviating the error" may also include avoiding the error, if it will occur or is likely to occur in the future.

According to an embodiment, the method further comprises determining, upon confirming that the error is associated with at least one known error, a recommendation to resolve or alleviate the error, for example based on or using the error database. For example, determining the recommendation may include determining, based on the error database and/or corresponding training of the Al-module, one or more measures or actions to resolve, avoid or alleviate the at least known error, respectively, the at least one error indicated by the log data. Optionally, the one or more actions or measures may be performed at the microscopy system, for example based on corresponding control of the computing device of the microscopy system and/or the external computing device. Accordingly, the error may be automatically resolved, avoided or alleviated.

Optionally, the recommendation, information related thereto, and/or information indicated by the the recommendation may be output at a user interface of one or more of the computing device associated with of the microscopy system, the microscopy system, and the external computing device. Therein, the user interface may be of any type, such as a graphical user interface, a touch display, a haptic interface, or an acoustic interface. This may allow to provide guidance or instructions to a user, e.g. a user of the microscopy system or associated computing device, to resolve or alleviate the error. Thereby, effort and time at the manufacturer's or a service provider's side may be minimized.

In an exemplary implementation, one or more measures or actions to be performed at the microscopy system and/or instructions on how to resolve, avoid or alleviate the at least one error occurring at the microscopy system may be output at the user interface to guide the user. For example, a step-by-step guide may be output at the user interface.

Optionally, the recommendation or information related thereto output at the user interface may include one or more instructions to modify one or more settings of the microscopy system to resolve, avoid or alleviate the error. Further optionally, information related to one or more settings or features of the microscopy system may be determined and/or output at the user interface, such as for example corresponding sections of a manual of the microscopy system or similar information.

In an exemplary implementation, the recommendation includes one or more of:
- a notification notifiable at a user interface of the microscopy system to instruct or guide a user how to resolve, avoid or alleviate the at least one error;
- an indication about an available software update to resolve, avoid or alleviate the at least one error;
- an indication about an adjustment of one or more settings of the microscopy system to resolve, avoid or alleviate the at least one error; and
- an indication about a modification of one or more components and/or settings of the microscopy system to resolve, avoid or alleviate the at least one error.

Any one or more of the forementioned notification or indication may be output at the user interface in one or more of graphical, acoustic, and haptic form. Based on the notification and/or indication, the user may be efficiently guided or instructed to resolve, avoid or alleviate the error. Hence, downtime of the microscopy system may be minimized. Also, time and effort at the manufacturer's or a service provider's side may be minimized or even avoided.

In an exemplary implementation, a chatbot interface may be provided at the microscopy system and/or computing device thereof allowing a user to interact with the Al-based module. For example, one or more questions or queries about the error and/or the recommendation may be provided by a user, which may allow the Al-based module to provide or output specific information to assist the user in resolving the error. Hence, the error may be efficiently and quickly resolved at a minimum downtime of the microscopy system.

According to an embodiment, the method further comprises predicting, based on the evaluation of the log data, that the at least one error will occur at the microscopy system, for example in the future or near future. In an exemplary implementation, the Al-based module may analyse the log data of the microscopy system in the background, e.g. during operation of the microscopy system by a user. This may be performed by the computing device of the microscopy system and/or by the external computing device. In the latter case, the log data may be transmitted to the external computing device, for example continuously or in certain intervals.

Upon determining, based on evaluating the log data, that an error is likely to occur at the microscopy system, the user may be notified. For example, a recommendation to avoid occurrence of said at least one error at the microscopy system may be determined by the Al-based module, and optionally provided to the user at a user interface of the microscopy system and/or its computing device. Hence, errors at and downtime of the microscopy system may be avoided. The recommendation to avoid the error may contain the same or similar information as a recommendation to resolve or alleviate an error des cribbed herein.

According to an embodiment, the method further comprises one or more of:
- storing the log data indicative of the at least one error in an error database; and
- re-training or fine-tuning the Al-based module based on the error database.

Storing the log data may include storing a respective entry in an error database associated with the error and linking the log data thereto. Storing the log data may allow for further analysis and use to resolve errors occurring in the future. Re-training the Al-based module may allow to continuously improve performance, accuracy and versatility of the Al-based module.

A second aspect of the present disclosure relates to a computing device including one or more processors for data processing, wherein the computing device is configured to carry out steps of the method according to the first aspect. The computing device may be a computing device of the microscopy system or an external computing device remote from the microscopy system.

The computing device described herein may refer to any data processing device, including a standalone computing device or server and computing networks with a plurality of inter-operating computing devices, such as a cloud computing system or server system. Alternatively or additionally, the computing device may be embodied, at least in part, as mobile device, such as a smart phone, a tablet computer, a notebook or the like.

The computing device may, in an example, comprise one or more communication interfaces configured to communicate with one or more further computing devices and/or data storages.

The computing device may further comprise one or more user interfaces configured to control the computing device and/or to output information, such as information related to the error and/or a recommendation.

A third aspect of the present disclosure relates to a microscopy system configured to carry out steps of the method of the first aspect of the present disclosure. The microscopy system may, for example, comprise a computing device to carry out steps of the method.

According to a fourth aspect of the present disclosure, there is provided a computer program comprising instructions, which, when the program is executed by a computing device or run on a processor of a computing device, causes the computing device and/or microscopy system to carry out the steps of the method according to the first aspect of the present disclosure.

A fifth aspect of the present disclosure relates to a computer-readable medium, for example a non-transitory computer-readable medium, storing the computer program according to fourth aspect of the present disclosure.

These and other aspects of the disclosure will be apparent from and elucidated with reference to the appended figures, which may represent exemplary embodiments.

### SHORT DECSRIPTION OF THE FIGURES

The subject-matter of the present disclosure will be explained in more detail in the following with reference to exemplary embodiments which are illustrated in the attached drawings, wherein:
Fig. 1 shows a microscopy system according to an exemplary embodiment;
Fig. 2 illustrates an external computing device and a microscopy system according to an exemplary embodiment; and
Fig. 3 shows a flow-chart illustrating a method of operating a microscopy system according to an exemplary embodiment.

The figures are schematic only and not true to scale. In principle, identical or like parts are provided with identical or like reference symbols in the figures.

### DETAILED DESCRIPTION

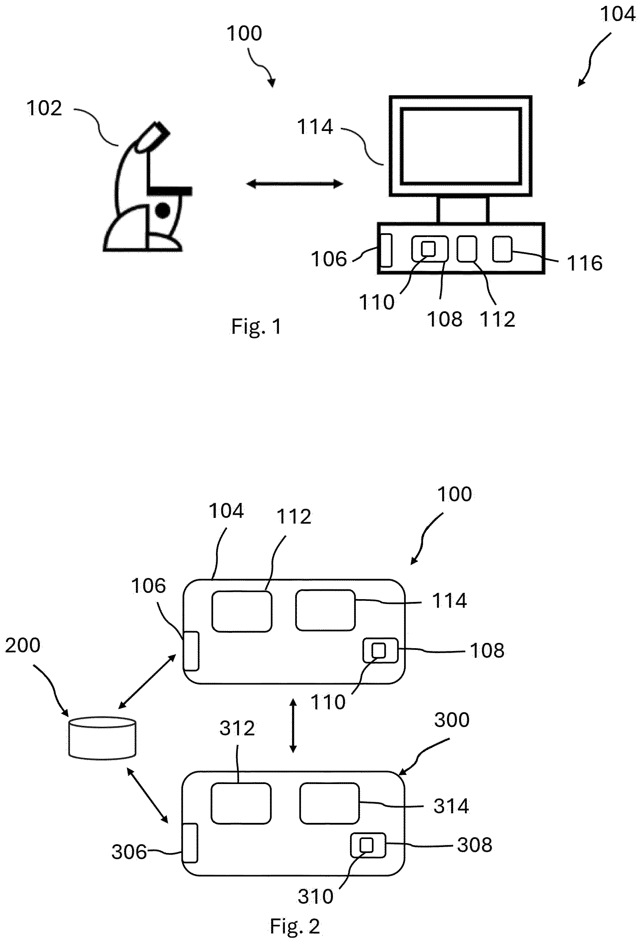

Fig. 1 shows a microscopy system 100 according to an exemplary embodiment.

The exemplary microscopy system 100 shown in Fig. 1 comprises a microscope device 102 or microscope 102 configured for visualizing and/or magnifying a sample. The microscope device 102 can include, for example, one or more of an optical system, an illumination source for illuminating a sample, a stage for supporting the sample, one or more detectors for capturing one or more images of the sample, one or more image sensors, one or more data storages, or further components. The microscope device 102 or microscope 102 can be any type of microscope, such as for example, an optical microscope, a brightfield microscope, a phase contrast microscope, a fluorescence microscope, a confocal microscope, an oblique plane microscope, an electron microscope, or a scanning probe microscope.

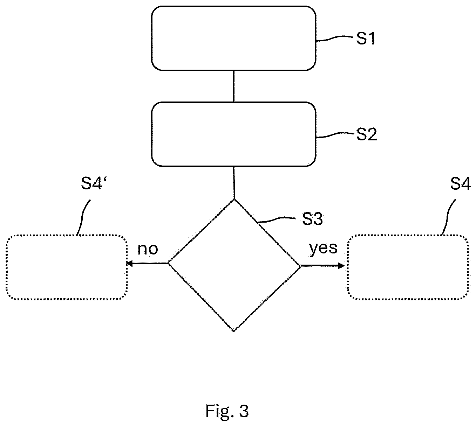

The microscopy system 100 further comprises a computing device 104. The computing device 104 may be a local computing device 104 or workstation, which may be configured to operatively control the microscope device 102 or microscopy system 100. This may include, for example, that a corresponding control software can be run on the computing device 104. Alternatively, the computing device 104 may be an external computing device communicatively and/or operatively coupled to and located remote from the microscope device 102, as further described e.g. with reference to Figs. 2 and 3. The following discussion of functions or elements of the computing device 104, however, applies to both the computing device 104 being embodied as integral part of the microscopy system 100 and embodied as external computing device.

The computing device 104 can be configured to operate or control the microscope 102. For this purpose, the computing device 104 comprises one or more communication interfaces 106, which may be communicatively and/or operatively coupled with the microscope 102. Via the communication interface 106, bi-directional data exchange between the microscope 102 and the computing device 104 may be provided. For example, the computing device 104 may control the microscope 102 based on providing one or more control signals to the microscope 102 to cause the microscope 102 to perform one or more operations or actions. Further, data may be provided from the microscope 102 to the computing device 104, such as for example image data, sensor data or other data. In particular, the computing device 104 may be configured to obtain and/or receive log data from the microscope 102 indicative of one or more operations, events, actions that were performed by or occurred at the microscope 102.

Generally, the communication interface 106 can be configured for wired or wireless communication with the microscope 102, and optionally with one or more external data sources, or one or more further computing devices. The communication interface 106 may be configured to communicate and/or exchange data via an Internet connection, a Local Area Network (LAN) connection, a WiFi connection, a Bluetooth connection, a mobile phone network connection, a 3G connection, an edge connection, an LTE connection, a BUS connection, a wireless connection, a wired connection, a radio connection, a near field connection, an loT connection or any other connection. It should be noted that the computing device 104 may comprise a plurality of communication interfaces 106, e.g. of the same or different type.

The computing device 104 further comprises a processing circuitry 108 or control circuitry 108 with one or more processors 110 for data processing.

The computing device 104 further comprises an Al-based module or component 112 configured to evaluate the log data of the microscope 102. The Al-based module 112 may be an integral part of the processing circuitry 108, and may be implemented in software and/or hardware. For example, the Al-based module may include one or more software components or algorithms, implemented in or being executed by the processing circuitry 108.

The Al-based module 112 may not be limited to particular types of Al-based modules or Al-based models, but can refer to or include one or more of a classificatory model, a Large Language Model (LLM), a predictive model, a recommender system, or other types, as described in more detail hereinabove. The Al-based module 112 may include a pretrained or locked model, or it may be re-trained, for example on-the-fly, during runtime or inference.

The computing device 104 further comprises at least one data storage 116 for storing data, one or more computer programs and/or corresponding software instructions (also referred to herein as "instructions"). For example, at least a part of the log data received or obtained from the microscope 102 or microscopy system 100 may be stored at the data storage 116.

The computing device 104 further includes a user interface 114 for receiving one or more user inputs and/or for providing or outputting information or data to the user. The user interface 114 may, for example, include one or more of a keyboard or mouse for controlling the computing device 104, a display for outputting graphical or visual information, a speaker for outputting audio information, and a haptic element for outputting haptic information.

As discussed in detail hereinabove and hereinbelow, the computing device 104 is configured to receive, e.g. via the communication interface 106, log data indicative of at least one error occurring at the microscopy system 100. The computing device 104 may process the received log data, by means of the Al-based module 112, to evaluate or analyze the log data with respect to one or more known errors. Moreover, the computing device 104 is configured to determine, based on the evaluation, whether the error indicated by the log data is associated with at least one known error.

These and other functions of the computing device 104 are further described with reference to Figs. 2 and 3.

Fig. 2 illustrates a microscopy system 100, a computing device 104 associated therewith, and an external computing device 300. Unless stated otherwise, the microscopy system 100 and the computing device 104 of Fig. 2 have the same elements, components and functions, as described with reference to Fig. 1. In the following, it may jointly be referred to Figs. 1 and 2.

The external computing device 300 shown in Fig. 2 may be identical or similar in design, configuration and/or functionality, as the computing device 104 associated with the microscopy system 100 and described with reference to Fig. 1. In particular, the external computing device 300 comprises a processing circuitry 308 with one or more processors 310 for data processing. Further, the external computing device 300 comprises at least one Al-based module 312 configured to evaluate log data. Further, the external computing device comprises a communication interface 306 for operatively and/or communicatively coupling the external computing device 300 to one or more of the microscope 102, the microscopy system 100, the computing device 104 of the microscopy system 100, and/or one or more external data sources.

Optionally, one or more of the microscopy system 100, the computing device 104, and the external computing device 300 may have access to an error database 200. The error database 200 may, for example, be stored at an external data source and accessed via the communication interfaces 106, 306. Alternatively or additionally, the error database 200 may be stored at and/or implemented in one of or both the computing device 104 and the external computing device 300. For instance, the error database 200 may be stored at a data storage of the respective computing device 104, 300. Alternatively or additionally, the error database 200 may be implemented or included in one of or both the Al-based module 112 of the computing device 104 and the Al-based module 312 of the external computing device 300. For example, the one or more Al-based modules 112, 312 can be trained based on the error database 200 to evaluate the log data. Alternatively or additionally, the error database 200 may be accessed by the one or more Al-based modules 112, 312 for the evaluation of the log data.

The error database 200 can include a plurality of entries, each entry being indicative of at least one known error that occurred at one or more microscopy systems. For example, one or more entries of the error database 200 may be indicative of one or more error characteristics and/or one or more error patterns of the respective known error associated with the respective entry.

Optionally, one or more of the entries of the error database 200 may be linked to or associated with corresponding log data indicative of said at least one known error. For example, the corresponding log data indicative of the respective known error of the entry can be stored in the error database 200.

Further optionally, one or more of the entries of the error database 200 can include at least one recommendation to resolve, avoid or alleviate said at least one known error associated with the respective entry of the error database 200. Such recommendation may, for example, include information on how the respective known error has been resolved. Alternatively or additionally, a recommendation may be informative or descriptive of one or more measures or actions to be performed at the microscopy system 100 to resolve, avoid or alleviate the respective known error.

Fig. 3 shows a flow-chart illustrating a method of operating a microscopy system 100, for example via a computing device 104 of the microscopy system 100 and/or via the external computing device 300, as described with reference to Figs. 1 and 2.

The method comprises at step S1 obtaining and/or receiving log data indicative of at least one error occurring at the microscopy system 100. The log data may be obtained and/or received at step S1 at the computing device 104 of the microscopy system 100 and/or at the external computing device 300, as illustrated in and described in further detail with reference to Figs. 1 and 2. Optionally, the log data may be transmitted from the microscopy system 100 to the external computing device 300 and/or computing device 104 at step S1.

Step S2 of the method comprise evaluating, by means of an Al-based module 112, 312, the obtained log data with respect to one or more known errors. The Al-based module 112, 312 may be implemented at one of or both the computing device 104 of the microscopy system 100 and the external computing device 300.

Step S3 of the method encompasses determining, based on the evaluation of step S2, whether the error indicated by the log data is associated with at least one known error.

Optionally, step S3 may include determining, based on evaluating the log data with the Al-based module 112, 312, whether one or more error characteristics of the at least one error are indicated by and/or present in the log data, which one or more error characteristics correspond to or match one or more error characteristics of the at least one known error. Accordingly, determining whether the at least one error is associated with at least one known error may include evaluating and/or analysing the log data in terms of one or more error characteristics associated with the at least one known error.

As discussed in detail in the summary part, one or more error characteristics may define an error pattern of the at least one error. Hence, alternatively or additionally to determining one or more error characteristics, step S3 may optionally include determining and/or identifying, in the received log data, one or more error patterns associated with or indicative of one or more known errors.

For example, an error pattern and/or one or more error characteristics may be predefined or predetermined in the Al-based module 112, 312, e.g. based on a corresponding training of the Al-based module 112, 312, for the evaluation of log data in terms of whether the log data indicate an error that is associated with one or more known errors.

An error characteristic and/or error pattern can, for example, relate to one or more predefined log messages being present in and/or being derivable from the respective log data, such as for example one or more error messages. Alternatively or additionally, an error characteristic and/or an error pattern can relate to actuation or activation of one or more software and/or hardware components of the microscopy system 100 being involved in causing the respective error and/or being affected by the respective error. Therein, actuation or activation of one or more hard- and/or software components of the microscopy system 100 may be indicated in the respective log data by one or more log messages. Alternatively or additionally, an error characteristic and/or an error pattern can relate to one or more of a sequence of one or more log messages, an order of one or more log messages, a timing of one or more log messages, a time difference between a plurality of log messages, and the like.

Accordingly, determining an error characteristic and/or determining an error pattern may include determining that one or more particular log messages, a particular sequence of a plurality of log messages, a particular timing of one or more log messages, and/or a particular time difference between a plurality of log messages is present or contained in the log data.

Upon determining at step S3 that the error indicated in the log data is not associated with a known error, the method may terminate at step S4'.

Upon determining at step S3 that the error indicated in the log data is associated with a known error, the method may continue at step S4, which comprises determining a recommendation to resolve, avoid or alleviate, for example based on or using an error database 200 as illustrated in and described with reference to Fig. 2.

Optionally, the recommendation may be provided at a user interface 114 of the microscopy system 100 or its computing device 104. Alternatively or additionally, the recommendation may be provided at a user interface 314 of the external computing device 300.

Alternatively or additionally, one or more actions or measures to resolve, avoid or alleviate the error may be determined, executed and/or performed at step S4 by one or more of the computing device 104 and the external computing device 300.

Further optionally, a notification may be displayed at the one or more user interfaces 114, 314 to instruct a user how to resolve, avoid or alleviate the at least one error at step S4. Alternatively or additionally, an indication about an available software update to resolve or alleviate the at least one error may be provided at the one or more user interfaces 114, 314. Alternatively or additionally, an indication about an adjustment of one or more settings of the microscopy system 100 to resolve, avoid or alleviate the at least one error may be provided at the one or more user interfaces 114, 314. Alternatively or additionally, an indication about a modification of one or more components of the microscopy system 100 to resolve, avoid or alleviate the at least one error may be provided at the one or more user interfaces 114, 314.

In an exemplary implementation, the Al-based module 112, 312 may include a Large Language Model to evaluate the log data. In this exemplary embodiment, step S4 may include, in the alternative of or in addition to determining and/or providing a recommendation, one or more of the following: identifying one or more data sections and/or log messages in the log data, the one or more data sections and/or log messages being indicative of the at least one error occurring at the microscopy system 100; extracting one or more data sections and/or log messages from the log data, the one or more data sections and/or log messages being indicative of the at least one error occurring at the microscopy system 100; highlighting or marking one or more data sections and/or log messages in the log data, the one or more data sections and/or log messages being indicative of the at least one error occurring at the microscopy system 100; generating a summary of the log data, the summary being indicative of the at least one error occurring at the microscopy system 100; removing one or more data sections and/or log messages from the log data, the one or more data sections and/or log messages being non-related to the at least one error occurring at the microscopy system 100; and determining a time information in the log data for the occurrence of the at least one error at the microscopy system 100.

Further optionally, the log data indicative of the at least one error occurring at the microscopy system 100 may be stored in the error database 200 and/or used for re-training or fine-tuning of the Al-based module 112, 312.

Some embodiments relate to a microscope comprising a system as described in connection with one or more of the Figs. 1 to 1. Alternatively, a microscope may be part of or connected to a system as described in connection with one or more of the Figs. 1 to 3. Fig. 1 shows a schematic illustration of a microscopy system 100 or system 100 configured to perform a method described herein. The system 100 comprises a microscope 100 and a computing device 104. The microscope 102 and/or microscopy system 100 is configured to take images and is connected to the computing device. The computing device 104 is configured to execute at least a part of a method described herein. The computing device 104 may be configured to execute a machine learning algorithm. The computing device 104and microscope 102 may be separate entities but can also be integrated together in one common housing. The computing device 104 may be part of a central processing system of the microscope 102 and/or the computing device 104 may be part of a subcomponent of the microscope 102, such as a sensor, an actor, a camera or an illumination unit, etc. of the microscope 102.

The computing device 104, 300 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computing device 104, 300 may comprise any circuit or combination of circuits. In one embodiment, the computing device 104, 300 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computing device 104, 300 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. computing device 104, 300 may include one or more storage devices or data storages, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computing device 104, 300 may also include a display device, one or more speakers, and a keyboard and/or controller, which can include a mouse, trackball, touch screen, voice-recognition device, or any other device that permits a system user to input information into and receive information from the computing device 104, 300.

Some or all of the method steps may be executed by (or using) a hardware apparatus, like for example, a processor, a microprocessor, a programmable computer or an electronic circuit. In some embodiments, some one or more of the most important method steps may be executed by such an apparatus or computing device.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system or computing device, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus, computing device or microscopy system as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer, computing device, computer system or a programmable logic device, configured to, or adapted to, perform one of the methods described herein.

A further embodiment comprises a computer or computing device having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, computing device, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a preprocessing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine- learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "j".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### List of reference signs

- 100: microscopy system
- 102: microscope /microscope device
- 104, 300: computing device
- 106, 306: communication interface
- 108, 308: processing circuitry
- 110, 310: processor(s)
- 112, 312: Al-based module
- 114, 314: user interface
- 116: data storage
- 200: error database

## Claims

1. A computer-implemented method of operating a microscopy system (100), the method comprising:
obtaining log data indicative of at least one error occurring at the microscopy system (100);
evaluating, by means of an Artificial Intelligence-based, Al-based, module the obtained log data with respect to one or more known errors; and
determining, based on the evaluation, whether the error indicated by the log data is associated with at least one known error.

2. The method according to the previous claim, wherein obtaining the log data includes receiving the log data at one of or both a computing device (104) of the microscopy system (100), and an external computing device (300) remote from the microscopy system (100).

3. The method according to any one of the previous claims, wherein obtaining the log data includes receiving the log data at an external computing device (300) communicatively couplable with the microscopy system (100); and/or
wherein the method further comprises transmitting the log data from the microscopy system (100) to an external computing device (300).

4. The method according to any one of the previous claims, wherein the Al-based module (112, 312) is implemented in one of or both computing device (104) of the microscopy system (100), and an external computing device (300) remote from the microscopy system (100).

5. The method according to any one of the previous claims, wherein the Al-based module (112, 312) includes a Large Language Model.

6. The method according to any one of the previous claims, further comprising, upon determining and/or confirming that the error indicated by the log data is associated with at least one known error, one or more of:
identifying one or more data sections in the log data, the one or more data sections being indicative of the at least one error occurring at the microscopy system (100);
extracting one or more data sections in the log data, the one or more data sections being indicative of the at least one error occurring at the microscopy system (100);
highlighting or marking one or more data sections in the log data, the one or more data sections being indicative of the at least one error occurring at the microscopy system (100);
generating a summary of the log data, the summary being indicative of the at least one error occurring at the microscopy system (100);
removing one or more data sections from the log data, the one or more data sections being non-related to the at least one error occurring at the microscopy system (100); and
determining a time information in the log data for the occurrence of the at least one error at the microscopy system (100).

7. The method according to any one of the previous claims, wherein determining whether the error indicated by the log data is associated with a known error includes:
identifying, in the log data, one or more error patterns and/or one or more error characteristics associated with or indicative of one or more known errors.

8. The method according to the previous claim, wherein the one or more error characteristics and/or the one or more error pattern relate to one or more of:
- one or more log messages being present in the respective log data;
- a sequence of one or more log messages,
- an order of one or more log messages,
- a timing of one or more log messages, and
- a time difference between a plurality of log messages.

9. The method according to any one of the previous claims, wherein the Al-based module (112, 312) is trained using recorded log data indicative of a plurality of known errors that occurred at one or more microscopy systems (100); and/or wherein the Al-based module (112, 312) is trained based on an error database (200), the error database (200) including a plurality of entries, each entry being indicative of at least one known error that occurred at one or more microscopy systems (100);
optionally wherein each entry is linked to or associated with corresponding log data indicative of said at least one known error.

10. The method according to the previous claim, wherein at least a subset of the entries, preferably each entry, includes at least one recommendation to resolve or alleviate said at least one known error associated with the respective entry of the error database (200).

11. The method according to any one of the previous claims, further comprising:
determining, upon confirming that the error is associated with at least one known error, a recommendation to resolve or alleviate the error based on or using the error database (200); and
optionally providing the recommendation at a user interface (114, 314) of the microscopy system (100).

12. The method according to claim 10 or 11, wherein the recommendation includes one or more of:
a notification notifiable at a user interface (114, 314) of the microscopy system (100) to instruct a user how to resolve or alleviate the at least one error;
an indication about an available software update to resolve or alleviate the at least one error;
an indication about an adjustment of one or more settings of the microscopy system (100) to resolve or alleviate the at least one error;
an indication about a modification of one or more components of the microscopy system (100) to resolve or alleviate the at least one error.

13. The method according to any one of the previous claims, further comprising:
predicting, based on the evaluation of the log data, that the at least one error will occur at the microscopy system (100); and
optionally providing a recommendation to avoid occurrence of said at least one error at the microscopy system (100).

14. A computing device (104, 300) including one or more processors (110, 310) for data processing, wherein the computing device (104, 300) is configured to carry out steps of the method according to any one of the previous claims.

15. A microscopy system (100) configured to carry out steps of the method of any one of claims 1 to 13.
